# EUROPEAN PATENT SPECIFICATION

(11) **EP 0 466 451 B1**
(45) Date of publication and mention of the grant of the patent: **02.11.1995**
(21) Application number: 91306212.1
(22) Date of filing: 09.07.1991
(51) Int. Cl.: G01J 3/46

(54) **Dyeing lenses**
Tönung von Linsen
Teinture des lentilles

(30) Priority: 10.07.1990 JP 182107/90; 10.07.1990 JP 182108/90; 13.07.1990 JP 186520/90; 24.05.1991 JP 120339/91
(43) Date of publication of application: 15.01.1992
(73) Proprietor: SEIKO EPSON CORPORATION, Shinjuku-ku Tokyo (JP)
(72) Inventor: Koizumi, Shuzo, Suwa-shi, Nagano-ken (JP); Uehara, Noriaki, Suwa-shi, Nagano-ken (JP); Kobayashi, Toru, Suwa-shi, Nagano-ken (JP)
(74) Representative: Sturt, Clifford Mark

(56) References cited:
- EP-A- 0 144 113
- EP-A- 0 152 950
- US-A- 4 553 975

## Description

The present invention relates to a dyeing method for lenses and colour matching method for lenses.

An order for a coloured lens may be received in two ways, by designation of a colour selected from the standard colour range of the maker or by asking for the presentation of a sample of a colour not included in the standard colours of the dyeing plant.

Colouring of lenses may be performed by adding such additives as disperse dyes and dyeing auxilaries to water to obtain a dye bath, and by dipping the lens in dye bath thus obtained, which is heated to between about 70° and about 90°C. Density of colouring may be increased by increasing the dipping time, and, in a dye bath made up of several types of dyes, hue may also start to change. Selection of a dye bath and toning that are necessary to obtain the desired colour as well as the determination of dyeing time and the works of colour assessment and shading of the coloured lens, depend largely on the technique of a skilled worker and are not suited to mass production, because an enormous number of manhours must be spent.

Usually, therefore, special dye baths, each toned for a specific colour, are prepared and standard dyeing times are determined for all the standard colours of a maker. However, as a large number of dye baths are to be prepared according to the kinds of the maker's standard colour if the number of the latter is large (there are more than 200 kinds of Seiko Colours), the operating efficiency of the dye baths is extremely low for the large space occupied.

When a sample colour is required, as opposed to a standard colour, the operator, after inspecting the sample colour, either selects a dye bath a similar colour among those already prepared or prepares a dye bath by mixing dyes anew. In addition, the dyeing time in such cases has to be estimated by the operator.

Although the recent advance of CCM (computer colour matching) technique has given rise to the use of colour matching methods in which a computer is used at the site of dyeing or painting, a technique suitable for dyeing and colour matching of lens has not yet been established.

Typical prior art methods are disclosed in EP-A2-0144113 and EP-A2-0152950.

The following problems are seen in the conventional dyeing methods and colour matching methods.
(1) When a sample colour is ordered, the necessary time period from the receipt of the order to the delivery of the product to the orderer becomes long and the life style of the user of the lenses may be hampered, due to the fact that the sample must be sent to the dyeing plant by the user. Further, transportation costs are increased, and responsibility for storage and care of the sample arises, as well as the possibility of loss or registration error of the sample.
(2) As at least two years of experience in this field and a high level of knowledge are required to be able to make a suitable dyeing prescription (selection of dye bath, determination of dyeing time and compounding of dyes) and to make a judgement on the dyed colour, only a limited number of skilled workers are able to engage in dyeing work.
(3) It is difficult even for a skilled worker to obtain a desired colour at the first time of dyeing, and a number of dyeing operations and a long time are required for shading, resulting in a low productivity.
(4) There is a large variation in colour judgement by different persons or even by one person depending on the difference in physical and mental condition.
(5) The operating efficiency of the dye baths is low and they occupy a large space because a specialised dye bath has to be prepared for each colour.

Thus the present invention seeks to solve these problems and its object is to provide a dyeing method for lenses by which a suitable dyeing prescription is promptly given to the operator by means of precise colour matching, so that an operator other than a skilled worker may readily engage in the dyeing operation and so that an improvement in productivity and colour quality, as well as a reduction in delivery time, may be achieved.

According to a first aspect of the invention there is provided a method of colouring lenses comprising the steps of determining spectral characteristics of a desired target colour, converting these into numerical information, inputting the resultant numerical information into a computer containing a program for calculating dye prescriptions from such numerical information, and performing the so calculated dye prescription upon a lens to colour it, wherein the spectral differences between the target colour and the lens material is chromatically synthesised in accordance with the formula${\text{K = Kℓ + C₁ K₁ + C₂K₂ + ... + C}}_{\text{n}} {\text{K}}_{\text{n}}$
where K is the transmittance of the target colour;
Kℓ is the transmittance of the lens material;
Cₙ is the concentration of the dye having the suffix n; and
Kₙ is the relative intensity characteristic of that dye.

The computer may contain information derived from the effects of colouring with various dyes upon a lens.

Preferably, the determination and conversion takes place at a location remote from the computer and the information is transmitted on-line.

In such cases, the information may be first transmitted to a host computer for onward transmission to a selected one of a number of remote computers.

Other aspects of the invention, provide for lenses, in which information on the colour chosen by a customer is numerically determined at an optician's shop or the like and is transmitted to a dyeing plant so that a suitable dyeing prescription is determined on the basis of such information.

In the case of dyeing a plastic lens into a desired colour, numerically determined information on the desired colour is processed by a computer so as to obtain the compounding ratio of dyes and time to be placed in thus obtained dye bath.

In the case of dyeing a plastic lens into a desired colour, the numerically determined information on the desired colour is processed by a computer so as to obtain suitable dye baths and respective dyeing time.

The dyed lens is analysed by a spectrophotometer and the thus obtained data is processed by a computer for an inspection on colour, and, if rejected at such inspection, a dyeing prescription may be obtained by either of the foregoing methods.

The difference in spectral characteristics between the dyed lens and the lens material is converted into a unit concentration which is defined as relative strength characteristic of a dye bath to the lens, the relative intensity characteristics of one or more types of dye baths are combined for a desired colour.

The amount to be added by the relative intensity characteristic of each dye bath is converted into the dyeing time for the respective dye bath.

The amount to be added by the relative strength characteristic of each dye bath is converted into compounding amount of dyes and the respective dyeing time.

The invention also provides, in a second aspect, a method of mixing dyes for achieving a target colour for a lens material using the formula${\text{K = Kℓ + k₁a₁K₁ + k₂a₂K₂ + ... + k}}_{\text{n}} {\text{a}}_{\text{n}} {\text{K}}_{\text{n}}$
where k₁ + k₂ + ... kₙ = 1,
where aᵢ = Cᵢ/ΣCᵢ i = 1 to n
where K is the transmittance of the target colour;
Kℓ is the transmittance of the lens material;
Cₙ is the concentration of the dye having the suffix n; and
Kₙ is the relative intensity characteristic of that dye.

The invention is hereinafter described by way of examples and with reference to the accompanying drawings, in which:-
Figure 1 is a graph of concentration against dyeing time, representing speed at different bath temperaturs;
Figure 2 is a block diagram of an on-line system for operating in accordance with the invention;
Figure 3 is a graph showing the spectral transmittance of a sample colour over a range of wavelengths; and
Figure 4 is a graph similar to Figure 3 for another sample colour.

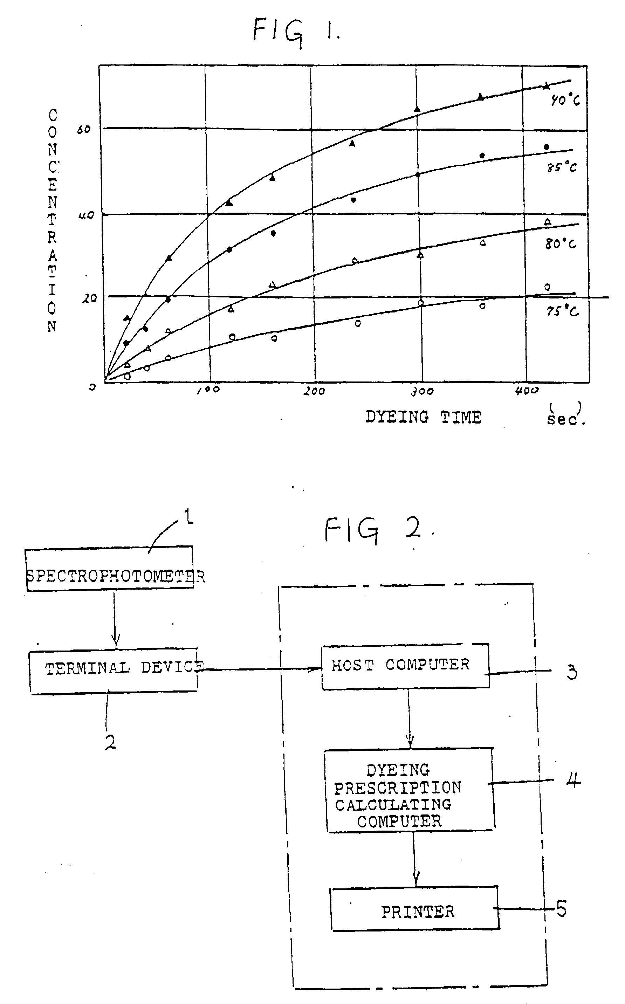

In use, spectral information about a sample colour is obtained at the shop of an optician, if a customer does not select a colour from the standard range of the maker. Some of this information is derived from a photospectrometer 1 (Figure 2) located in the shop of the optician. This together with other information is transmitted on-line by a terminal device 2 to a main host computer 3 at the head office of the maker. This transmits such data after processing to a dyeing prescription calculating computer 4 from which dyeing conditions are passed to a printer 5. Whilst the location of those may vary, the usual location for the photospectrometer 1 and terminal device 2 will be the shop of the optician.

The host computer is placed at the main office of the maker or at the plant at which orders received are collectively administered. The dyeing prescription calculating computer and the printer are provided at each of the dyeing plants wherever located.

When a customer desires a colour which is not included in the maker's standard, a sample of the desired colour is measured by means of a spectrophotometer at the shop or office of the optician. Such spectral characteristics together with other processing prescriptions are transmitted to the host computer at the main office through the on-line system. The host computer sends processing instructions to one of the plants according to types and delivery period, and at the same time the information on colour (spectral characteristics) is also transmitted to a computer of the plant through the on-line system.

Examples of information on colour, but not limited to these, are listed below:-
(1) spectral characteristics (spectral transmittance, spectral absorptivity, spectral reflectance);
(2) tristimulus values;
(3) three attributes of colour (value, chroma, hue);
(4) value on chromaticity coordinate;
(5) equivalent colour spatial coordinate value.

The maximum difference in spectral transmittance between the dyed lens and the lens material at a given wavelength is set as "1" and the difference in transmittance at a different wavelength is converted into a ratio on such basis to define the relative intensity characteristic of the dye bath to the lens, the thus obtained relative intensity characteristic being a fundamental unit for representing this particular dye bath. Thus, when the difference in spectral characteristics between the target colour and the lens material is chromatically synthetized, each added amount corresponds to the dyeing concentration of the respective dye. This relationship is expressed in Formula (1).${\text{K = Kℓ + C₁K₁ + C₂K₂ + ....+C}}_{\text{n}} {\text{K}}_{\text{n}}$
where
K is the transmittance of the target colour;
Kℓ is the transmittance of the lens material;
Cₙ is the concentration of the dye having the suffix n; and
Kₙ is the relative intensity characteristic of that dye.

Although it is ideal to continue the chromatic synthesis until a colour exactly the same as the target colour is achieved, use of several dozens of dyes and dye baths results in an increase in costs and a tediousness in operation and avoidance is preferred from the viewpoint of productivity because time must be spent on calculation. Dyes and dye baths should be limited to four or five kinds at most and the calculation for the chromatic synthesis should be terminated upon achieving the level at which the difference in colour cannot be visually appreciated. While, practically, little problem occurs if the deviation from the target colour is within CIELAB colour difference of 0.3, if a higher accuracy is desired, it is preferable to set the respective standard values for the differences in value, chroma and hue in accordance with the level of the concentration and chroma of the target colour.

Next, dyeing speed (concentration) in relation to dyeing time and temperature is investigated and the following formula (2) is obtained.${\text{C}}_{\text{f}} \text{= (t, T)} {\text{= e}}^{\text{cT+d}} {\text{.t}}^{\text{aT+b}}$
where
a, b, c, d are constants of dyes;
t is time; e is the exponential (i.e.
e = 2.7182); and
T is temperature.

It should be noted that, as previously dyed colour in the case of continuous dyeing using different dye baths is decolourized in the subsequent dyeing process, dyeing must be performed at the concentration adjusted for the amount of previous decolourization. Such decolourization speed is expressed by a function of temperature and time to obtain formula (3).$\text{D = (t, T)}$
where D is the decolourisation speed.

Thus the concentration to be actually dyed is expressed by formula (4).${\text{C = C}}_{\text{f}} \text{+D}$

Suitable prescription (type of dye bath, dyeing time, temperature of dye bath) for dyeing a desired colour may be obtained by solving formulae (1) to (4).

Referring next to the compounding formula of dyes for a dye bath, Formula (1) may be transformed for example into formula (5).${\text{K = Kℓ + a₁K₁+a₂K₂ +...+a}}_{\text{n}} {\text{K}}_{\text{n}}$${\text{a}}_{\text{i}} {\text{=C}}_{\text{i}} {\text{/ΣC}}_{\text{i}}$

Here a₁ is the theoretical compounding ratio of the dye to be included in the lens. As, however, colouring characteristic is slightly different in different dyes, it is necessary in actual compounding that aᵢ be multiplied by a coefficient peculiar to each dye. Such relationship is expressed by formula (6).${\text{K=Kℓ+k₁a₁K₁+k₂a₂K₂ +...+k}}_{\text{n}} {\text{a}}_{\text{n}} {\text{K}}_{\text{n}}$
where k₁+k₂ +...kₙ= 1.

Further, temperature and total weight should be fixed, because the investigation on dyeing speed in relation to dyeing temperature or total weight and compounding ratio of dyes results in too little improvement in prescription accuracy for the long time required for the investigation. In practice, they are most suitably determined in the ranges of temperature at 75°C to 95°C and of a total weight of 2 to 5g per litre. It is desirable to select dyes having the same colouring characteristic for improving the prescription accuracy.

In the following actual examples of the present invention will be described.

### Example 1

A dye bath was prepared from the following disperse dyes:-

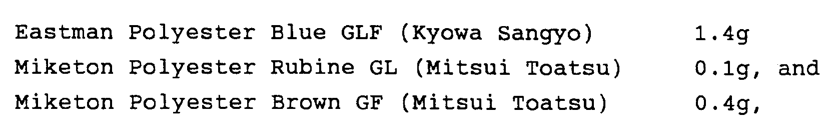

which with 2cc of auxiliaries were dispersed into 1 litre of water and were stirred well to prepare the dye bath. Four such baths were heated to temperatures of 75°C, 80°C, 85°C and 90°C respectively, and plastic lenses obtained by means of thermal polymerization of diethylene glycol bisallyl carbonate were dyed in the respective dye baths with nine different times so as to investigate the dyeing speed in relation to temperature and time. The result is shown in Figure 1, and the relationship is expressed by the formula:-$\text{lnC=(-o.17T-15.85)ln(t)+0.19T-16}$

Next, as a target colour, a sample lens of Seiko Nouveau Colour Brown 30 (a Seiko standard colour) was measured by spectrophotometer and the obtained data was synthesized by using the relative intensity characteristic of this dye bath, whereby a concentration coefficient of 29 resulted. Dyeing time was calculated from Formula (7) to obtain 62 seconds at the temperature of 90°C. When the above described lens was dyed in accordance with this instruction, little difference in colour from the target colour was sensed.

### Example 2

Thirty types of dye baths for different colours were prepared, and in a similar manner as Example 1 plastic lenses obtained by means of thermal polymerization of diethylene glycol bisallyl carbonate were dyed in the respective dye baths and were investigated with respect to colouring speed and decolouring speed, the result being input to a computer to which a dyeing prescription calculating program is previously input. Next as a target colour a colour sample of Seiko Nouveau Colour Amber 30 (a Seiko standard colour) was measured by spectrophotometer and the spectral transmittance of wavelengths 390 to 730 nm is input into the above described computer. This data was processed by the computer to calculate the dyeing prescription for the target colour, whereby a succession of four types of dye baths among the thirty types of dye baths and dyeing time for each were obtained. Such dyeing prescription is shown in Table 1 below.

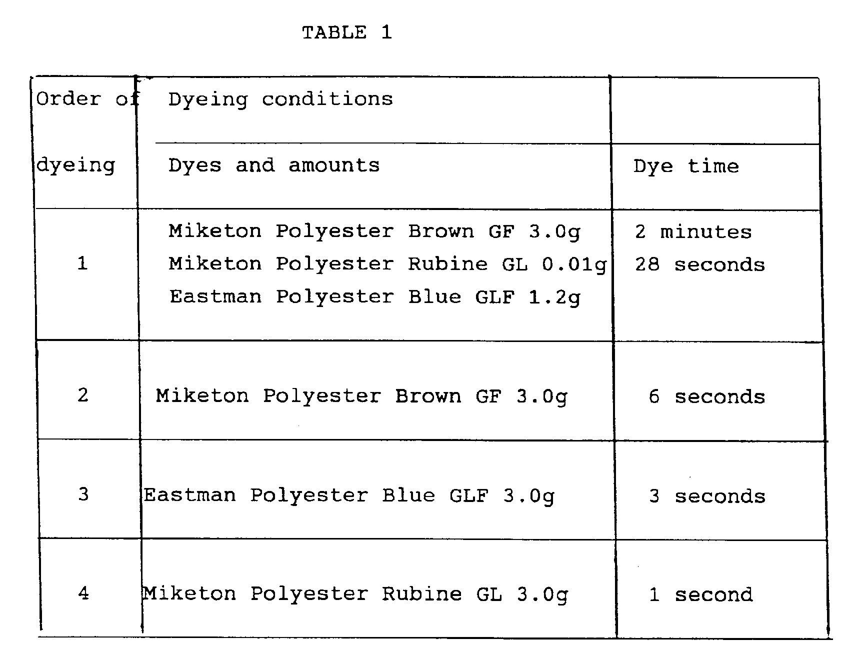

In each case, the bath had 2 cc of auxiliaries, in 1 litre of water and was heated to a temperature of 90°C.

A lens obtained by means of thermal polymerisation of diathylene glycol bisallyl carbonate was dyed in accordance with the dyeing instruction of Table 1 and was then subjected to a visional inspection by being placed next to the colour sample of Amber 30. It was dyed almost the same colour to the extent that discrimination was hardly possible. Further, the dyed lens was measured by a spectrophotometer to obtain the colour difference from the sample, the result being CIELAB colour difference of 0.24, thus passing inspection.

### Example 3

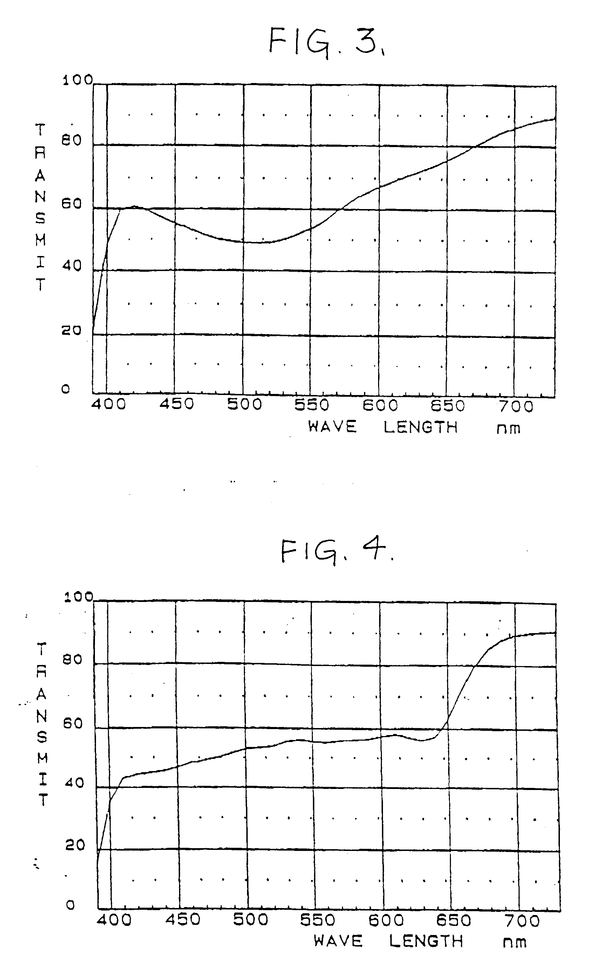

A sample colour had its spectral characteristics measured by a spectrophotometer and was found to have the spectral transmittance shown in Figure 3 for wavelengths from 390 to 730 nm. This data was transmitted on-line to a main host computer and passed on to a dyeing prescription calculating computer. The lens material was of a popular type with medium refractive index (NDl.56) treated with a hard-multi-coat process. The dyeing prescription for attaining the same colour as the sample colour was calculated by using the dyeing prescription calculating computer and the prescription shown in Table 2 was obtained.

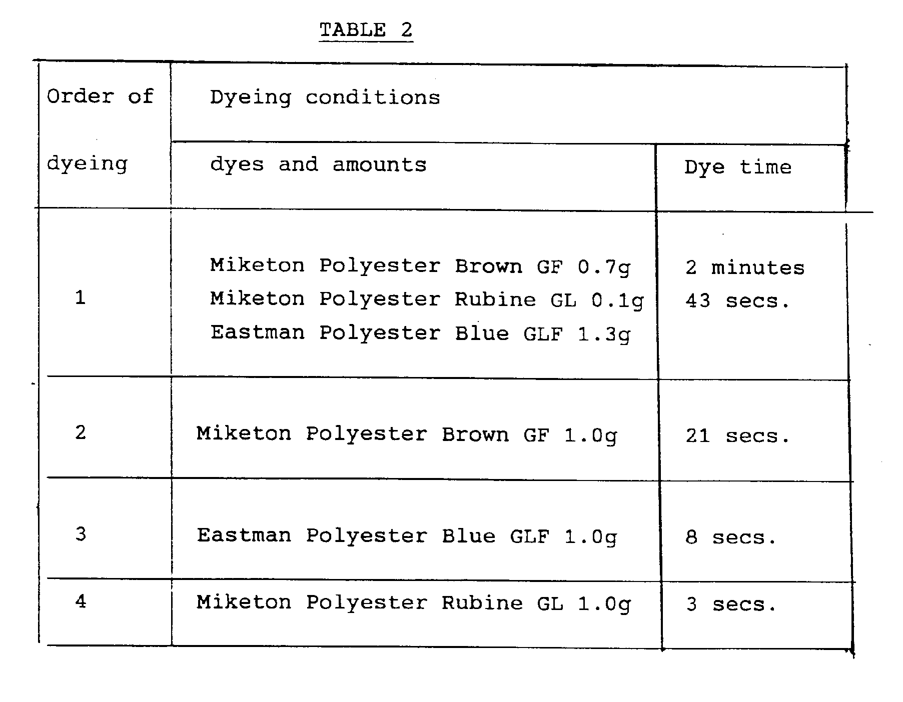

In each case, the bath had 2cc of auxiliaries in 1 litre of water and was heated to a temperature of 90°C.

A popular type medium refractive lens was dyed in accordance with this prescription and, after an application of coating, its colour was measured by a spectrophotometer. Its spectral characteristics generally matched with those of the sample colour and CIELAB colour difference was 0.32, which was within acceptable inspection standard variance.

### Example 4

In another case, the sample colour had spectral characteristics as shown in Figure 4. The material was also of a popular type medium refractive lens treated with a hard-multi-coat process. When, in a similar manner as described above, the dyeing prescription for attaining the same colour as the sample coolour was calculated, it was found that such colour could not be achieved by the permanently provided dye baths. Thus the instruction for preparing a dye bath by compounding dyes anew and the dyeing conditions were calculated. Such dyeing prescription is shown in Table 3.

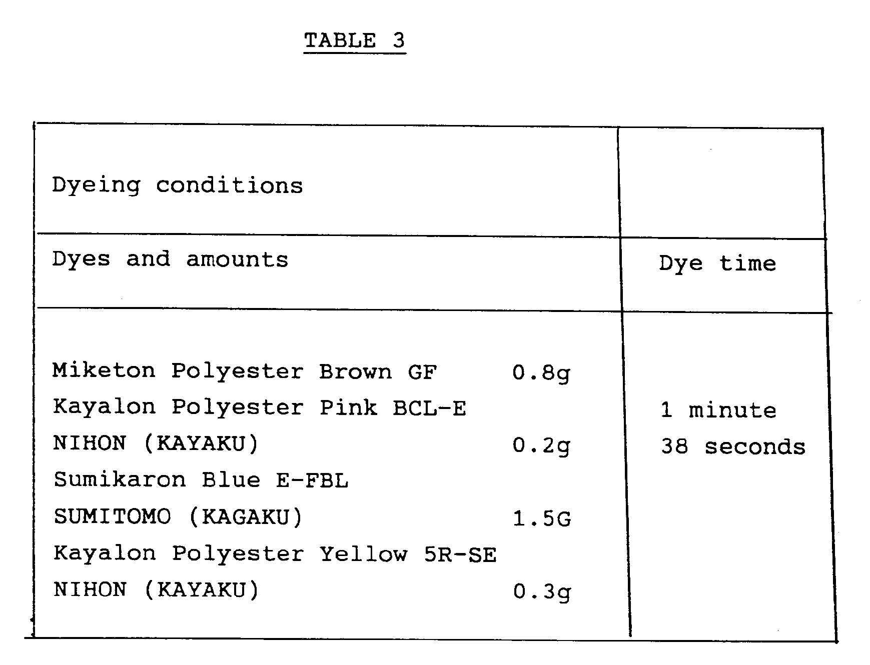

The bath had 2cc of auxiliaries in 1 litre of water and was heated to a temperature of 90°C.

A popular type medium refractive lens was dyed in accordance with the prescription and, after an application of coating, its colour was measured by a spectrophotometer. Its special characteristics generally matched with those of the sample colour and CIELAB colour difference was 0.32, which was within acceptable inspection standard.

### Example 5

Thirty types of dye baths for different colours were prepared, and in a similar manner as Example 1, plastic lenses obtained by means of thermal polymerization of diethylene glycol bisallyl carbonate were dyed in the respective dye baths and were investigated with respect to colouring speed and decolouring speed, the result being input to a computer to which a dyeing prescription calculating program is previously input. Next as a target colour a colour sample of Seiko Nouveau Colour Wine Rose 50 (a Seiko standard colour) was measured by spectrophotometer and the spectral transmittance of wavelengths 390 to 730 nm is input into the above described computer. This data was processed by the computer to calculate the dyeing prescription for the target colour, whereby a succession of three types of dye baths among the thirty types of dye baths and dyeing time for each were obtained. Such dyeing prescription is shown in Table 4.

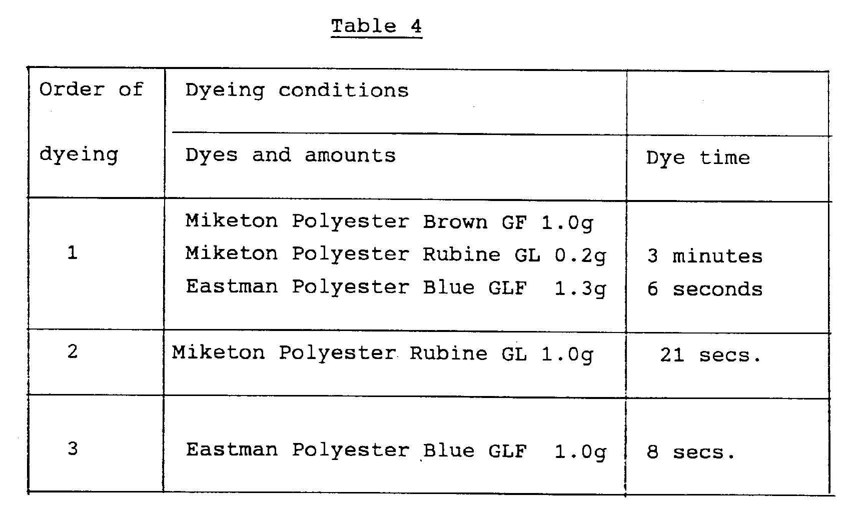

In each case, the bath had 2cc of auxiliaries in 1 litre of water and was heated to a temperature of 90°C.

When a lens obtained by thermal polymerisation of diethylene glycol bisallyl carbonate was dyed in accordance with this dyeing instruction and the dyed lens was measured for colour inspection using a spectrophotometer, a CIELAB colour difference 1.23 was indicated, failing to pass inspection. Further, a slight difference in colour was recognized also by visual inspection. Therefore, a dyeing prescription for shading was calculated and two types of dye baths and respective dyeing time were obtained. Such dyeing prescription is shown in Table 5.

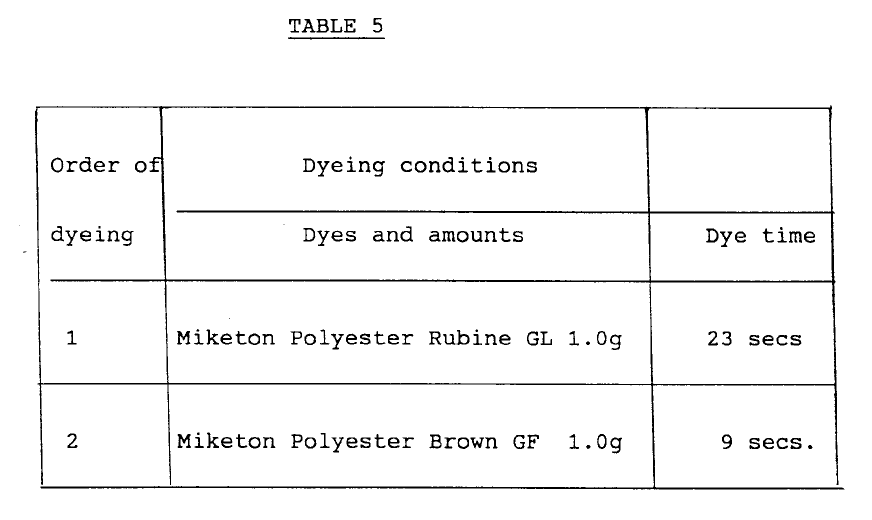

The dyeing prescription of Table 5 is used in addition to that of Table 4 in order to correct for the difference in colour of the lens obtained from the dyeing prescription of Table 4.

In each case, the bath had 2cc of auxiliaries in 1 litre of water and was heated to a temperature of 90°C.

When dyeing for shading was performed in accordance with this dyeing instruction and the dyed lens was measured for colour inspection by a spectrophotometer, the result was judged as passing the inspection, as the CIELAB colour difference was 0.28. When a visual judgement was made by comparing with the sample lens, no difference in colour was recognized.

As has been described above, types and concentration of dyes for colouring a lens to achieve a target colour may be accurately grasped by performing a colour mixing calculation using relative intensity characteristics of dye baths in relation to the lens. By converting such concentration into dyeing time or compounding ratio of dyes, an efficient dyeing prescription may be obtained. Further, since the prescribing calculation and colour judgement of the dyed lens are performed by a computer, the dyeing operation of lenses which has conventionally been performed only by a limited number of skilled workers may be performed by anyone, and productivity and colour quality are largely improved and stabilized. Furthermore, instead of transporting the sample of a colour desired by a customer, the information on colour is converted into numerical values and is directly transmitted from an optician's shop or the like to the dye plant and the dyeing prescription is determined by a human or computer on the basis of such information, reducing the delivery period and eliminating work and trouble associated with the care of samples.

Thus, as described above, instead of providing an actual colour sample, information on colour is converted into numerical values and is transmitted from an optician's shop or the like to a dye plant so as to reduce the time needed for delivery. Colour mixing calculation is performed by using the relative intensity characteristics of a dye bath in relation to the lens and thus obtained types and concentration of colour are converted into dyeing time or compounding amount of dyes so as to obtain an efficient dyeing prescription. Thus versatility in processing is possible, productivity and colour quality being stabilised and improved.

Colour mixing calculation is performed by using relative intensity characteristics of a dye bath in relation to the lens to match or approximate a target colour. Each added amount at this time corresponds to the dyeing concentration of a respective colour. Next, the relation of dye concentration to dyeing time and temperature and the relation of decolouring speed to temperature and time in the case of continuous dyeing using different dye baths, are investigated to obtain an optimum dyeing prescription (dye bath, dyeing time, temperature, compounding of dyes). Further, information on a sample colour is converted into numerical values and is transmitted to the dye plant through an on-line system or the like so that the dyeing prescription is obtained by the above described method and dyeing is performed.

## Claims

1. A method of colouring lenses, comprising the steps of determining spectral characteristics of a desired target colour, converting these into numerical information, inputting the resultant numerical information into a computer containing a program for calculating dye prescriptions from such numerical information, and performing the so calculated dye prescription upon a lens to colour it, wherein the spectral differences between the target colour and the lens material is chromatically synthesised in accordance with the formula${\text{K = Kℓ + C₁ K₁ + C₂K₂ + ... + C}}_{\text{n}} {\text{K}}_{\text{n}}$ where K is the transmittance of the target colour;
Kℓ is the transmittance of the lens material;
Cₙ is the concentration of the dye having the suffix n; and
Kₙ is the relative intensity characteristic of that dye.

2. A method as claimed in claim 1, wherein the computer contains information derived from the effects of colouring with various dyes upon a lens.

3. A method as claimed in claim 1 or 2, wherein the determination and conversion takes place at a location remote from the computer and the information is transmitted on-line.

4. A method as claimed in claim 3, in which the information is first transmitted to a host computer for onward transmission to a selected one of a number of remote computers.

5. A method as claimed in any preceding claim, in which for each of a plurality of dye baths the dye concentration is related to the dyeing time (t) and the temperature (T) by the formula${\text{C}}_{\text{f}} \text{=} \text{e} {}^{\text{cT+d}} \text{.} \text{t} {}^{\text{aT+b}}$ where a, b, c and d are constants of the dye and e is the exponential constant.

6. A method as claimed in claim 5, in which the dye concentration C_{f} is adjusted to an actual value C to take account of decolourisation in a subsequent dyeing process in accordance with the formula${\text{C = C}}_{\text{f}} \text{+ D}$ where D is the decolourisation speed and is a function of temperature and time.

7. A method of mixing dyes for achieving a target colour for a lens material using the formula:-${\text{K = Kℓ + k₁a₁K₁ + k₂a₂K₂ + ... + k}}_{\text{n}} {\text{a}}_{\text{n}} {\text{K}}_{\text{n}}$ where k₁ + k₂ + ... kₙ = 1,
where aᵢ = Cᵢ/ΣCᵢ i = 1 to n
where K is the transmittance of the target colour;
Kℓ is the transmittance of the lens material;
Cₙ is the concentration of the dye having the suffix n; and
Kₙ is the relative intensity characteristic of that dye.

8. A method as claimed in claim 7, wherein each separate dye is contained in a respective dye bath.

9. A method as claimed in claim 7, wherein the dyes are contained in a single bath.

## Patentansprüche

1. Verfahren zum Färben von Linsen, umfassend die Schritte: Bestimmen der spektralen Charakteristika einer gewünschten Zielfarbe, Umwandeln dieser Charakteristika in numerische Information, Eingeben der resultierenden numerischen Information in einen ein Programm zur Berechnung von Färbe-Vorschriften aus derartiger numerischer Information enthaltenden Computer, und Ausführen der derart berechneten Färbe-Vorschrift an einer Linse um diese zu Färben, wobei der spektrale Unterschied zwischen der Zielfarbe und dem Linsenmaterial gemäß der Formel${\text{K = K}}_{\text{l}} {\text{+ C₁ K₁ + C₂ K₂ + ... + C}}_{\text{n}} {\text{K}}_{\text{n}}$ chromatisch synthetisiert wird, wobei
K der Transmissionsgrad der Zielfarbe ist;
Kₗ der Transmissionsgrad des Linsenmaterials ist;
Cₙ die Konzentration des Farbstoffs mit dem Index n ist; und
Kₙ die relative Intensitäts-Charakteristik dieses Farbstoffs ist.

2. Verfahren nach Anspruch 1, wobei der Computer Information enthält, die von den Effekten des Färbens mit verschiedenen Farbstoffen an einer Linse abgeleitet ist.

3. Verfahren nach Anspruch 1 oder 2, wobei das Bestimmen und Umwandeln an einem von dem Computer entfernten Ort stattfindet und die Information online übertragen wird.

4. Verfahren nach Anspruch 3, in welchem die Information als erstes zu einem Hauptrechner übertragen wird zur Weiterübertragung zu einem aus einer Anzahl von Fernzugriffscomputern gewählten Computer.

5. Verfahren nach einem der vorhergehenden Ansprüche, in welchem für jedes aus einer Mehrzahl von Farbstoffbädern die Farbstoffkonzentration mit der Färbedauer (t) und der Temperatur (T) durch die Formel${\text{C}}_{\text{f}} {\text{= e}}^{\text{cT+d}} {\text{* t}}^{\text{aT+b}}$ in Beziehung steht, wobei a, b, c und d Konstanten des Farbstoffs und e die Exponentialkonstante ist.

6. Verfahren nach Anspruch 5, in welchem die Farbstoffkonzentration C_{f} in Übereinstimmung mit der Formel${\text{C = C}}_{\text{f}} \text{+ D}$ auf einen tatsächlichen Wert C eingestellt wird, um eine Entfärbung während eines nachfolgenden Färbeprozesses zu berücksichtigen, wobei D die Entfärbegeschwindigkeit und eine Funktion der Temperatur und der Zeit ist.

7. Verfahren zum Mischen von Farbstoffen zum Erzielen einer Zielfarbe für ein Linsenmaterial unter Verwendung der Formel:${\text{K = K}}_{\text{l}} {\text{+ k₁ a₁ K₁ + k₂ a₂ K₂ + ... + k}}_{\text{n}} {\text{a}}_{\text{n}} {\text{K}}_{\text{n}}$ wobei k₁ + k₂ + ... kₙ = 1,
wobei aᵢ = Cᵢ/ΣCᵢ i = 1 bis n
wobei K der Transmissionsgrad der Zielfarbe ist;
Kₗ der Transmissionsgrad des Linsenmaterials ist;
Cₙ die Konzentration des Farbstoffs mit dem Index n ist; und
Kₙ die relative Intensitäts-Charakteristik dieses Farbstoffs ist.

8. Verfahren nach Anspruch 7, wobei jeder einzelne Farbstoff in einem jeweiligen Farbstoffbad enthalten ist.

9. Verfahren nach Anspruch 7, wobei die Farbstoffe in einem einzigen Bad enthalten sind.

## Revendications

1. Procédé de coloration des lentilles, comprenant les étapes consistant à : déterminer les caractéristiques spectrales d'une couleur cible souhaitée, convertir ces caractéristiques en données numériques, introduire les données numériques résultantes dans un ordinateur comportant un programme de calcul des prescriptions des pigments à partir de données numériques de ce type et, exécuter la prescription des pigments ainsi calculée sur une lentille pour la colorer, dans lequel les différences spectrales entre la couleur cible et le matériau de la lentille sont synthétisées du point de vue chromatique suivant la formule :${\text{K = Kℓ + C₁K₁ + C₂K₂ + ... + C}}_{\text{n}} {\text{K}}_{\text{n}}$ où K est le pouvoir de transmission de la couleur cible ;
Kℓ est le pouvoir de transmission du matériau de la lentille ;
Cₙ est la concentration du pigment affectée du suffixe n ; et
Kₙ est la caractéristique d'intensité relative de ce pigment.

2. Procédé selon la revendication 1, dans lequel l'ordinateur contient des informations déduites des effets de coloration d'une lentille avec divers pigments.

3. Procédé selon la revendication 1 ou 2, dans lequel la détermination et la conversion se font en un endroit éloigné de l'ordinateur et dans lequel les données sont transmises en direct.

4. Procédé selon la revendication 3, dans lequel les données sont d'abord transmises à un ordinateur central en vue d'une autre transmission vers un ordinateur choisi parmi un certain nombre d'ordinateurs distants.

5. Procédé selon l'une quelconque des revendications précédentes, dans lequel pour chacun parmi une pluralité de bains de pigments, la concentration en pigment est liée au temps de coloration (t) et à la température (T) par la formule :${\text{C}}_{\text{f}} {\text{= e}}^{\text{cT+d}} {\text{. t}}^{\text{aT+b}}$ où a, b, c et d sont des constantes du pigment et e la constante exponentielle.

6. Procédé selon la revendication 5, dans lequel la concentration C_{f} en pigment est ajustée à une valeur réelle C pour tenir compte de la décoloration au cours d'un procédé ultérieur de coloration selon la formule :${\text{C = C}}_{\text{f}} \text{+ D}$ où D est la vitesse de décoloration qui dépend de la température et du temps.

7. Procédé pour mélanger des pigments afin d'obtenir une couleur cible pour un matériau de lentille en appliquant la formule :${\text{K = Kℓ + k₁a₁K₁ = k₂a₂K₂ + ... + k}}_{\text{n}} {\text{a}}_{\text{n}} {\text{K}}_{\text{n}}$ où k₁ + k₂ + ... kₙ = 1
où aᵢ = Cᵢ/ΣCᵢ i = 1 à n
où K est le pouvoir de transmission de la couleur cible ;
Kℓ est le pouvoir de transmission du matériau de la lentille ;
Cₙ est la concentration du pigment affectée du suffixe n ; et
Kₙ est la caractéristique d'intensité relative de ce pigment.

8. Procédé selon la revendication 7, dans lequel chaque pigment distinct est contenu dans un bain de pigment correspondant.

9. Procédé selon la revendication 7, dans lequel les pigments sont contenus dans un seul bain.
